# EUROPÄISCHE PATENTSCHRIFT

(11) **EP 2 212 988 B1**
(45) Veröffentlichungstag und Bekanntmachung des Hinweises auf die Patenterteilung: **25.12.2013**
(21) Anmeldenummer: 08852508.4
(22) Anmeldetag: 05.11.2008
(51) Int. Cl.: H02M 1/08, H02M 7/48

(54) **VERFAHREN ZUR ERKENNUNG DER BETÄTIGUNG EINES BEDIENELEMENTS EINER BEDIENFRONT EINES WECHSELRICHTERS UND BEDIENFRONT FÜR EINEN WECHSELRICHTER**
METHOD FOR DETECTING THE ACTUATION OF A CONTROL ELEMENT OF A CONTROL FRONT OF AN INVERTER AND CONTROL FRONT FOR AN INVERTER
PROCÉDÉ POUR IDENTIFIER L'ACTIONNEMENT D'UN ÉLÉMENT DE COMMANDE D'UN PANNEAU DE COMMANDE D'UN CONVERTISSEUR, ET PANNEAU DE COMMANDE POUR UN CONVERTISSEUR

(30) Priorität: 22.11.2007 AT 18972007
(43) Veröffentlichungstag der Anmeldung: 04.08.2010
(73) Patentinhaber: Fronius International GmbH, 4363 Pettenbach (AT)
(72) Erfinder: ANGERER, Christian, A-4522 Sierning (AT); GROSSAUER, Bernhard, A-4300 St. Valentin (AT); KREUZER, Harald Josef, 4616 Weißkirchen/Traun (AT)
(74) Vertreter: Sonn & Partner Patentanwälte
(86) Internationale Anmeldenummer: PCT/AT2008/000398
(87) Internationale Veröffentlichungsnummer: WO 2009/065158

(56) Entgegenhaltungen:
- DE-A1- 4 032 569
- GB-A- 1 219 074

## Beschreibung

Die Erfindung betrifft ein Verfahren zur Erkennung einer Betätigung zumindest eines von mehreren galvanisch getrennten Bedienelementen einer Bedienfront eines Wechselrichters.

Ebenso betrifft die Erfindung eine Bedienfront für einen Wechselrichter mit mehreren galvanisch getrennten Bedienelementen.

Allgemein ist aus dem Stand der Technik bekannt, dass Bedienelemente bzw. Bedienfronten mit mehreren Bedienelementen galvanisch von der für die Funktionsweise des Gerätes erforderlichen Elektronik getrennt sind. Dadurch ist gewährleistet, dass der Bediener der Bedienfront mit keinen hohen Spannungen bzw. Strömen in Berührung kommen kann und die entsprechenden einzuhaltenden Normen erfüllt sind. Die galvanische Trennung wird häufig derart erreicht, dass die Signale der Bedienelemente der Bedienfront über Optokoppler an eine Steuervorrichtung übertragen werden, sodass die durch das Betätigen der Bedienelemente gewünschte Aktion ausgeführt werden kann. Dazu ist es allerdings erforderlich, dass die Bedienfront ebenso eine Elektronik aufweist, welche bei Betätigung der Bedienelemente entsprechende Signale für den Optokoppler generiert. Dementsprechend ist für die Elektronik und zur Übertragung der Signale eine Stromversorgung erforderlich.

Die DE 10 2005 001 322 A1 beschreibt ein Verfahren und eine Schaltung zur galvanisch getrennten Übertragung eines Signals, wobei an die Primärseite eines Transformators eine pulsbreitenmodulierte Spannung angelegt wird, bei der unterschiedliche Tastverhältnisse unterschiedliche Signalzustände kennzeichnen. Mit Hilfe einer elektronischen Schaltung an der Sekundärseite des Transformators wird eine vom Tastverhältnis der primärseitigen Spannung abhängige Spannung ermittelt, dessen Größe den Signalzustand des primärseitigen Signals repräsentiert.

Nachteilig ist hierbei, dass es sich um eine aufwendige Elektronik der Bedienfront handelt, welche dementsprechend eine erhöhte Fehleranfälligkeit aufweist. Ebenso ist nachteilig, dass dazu eine eigene Stromversorgung erforderlich ist, welche die notwendige Elektronik ständig mit Strom versorgt. Dies ist insbesondere bei Geräten von Nachteil, bei welchen der Eigenverbrauch den Wirkungsgrad des Gerätes beeinflusst, wie beispielsweise bei einem Wechselrichter für eine Photovoltaikanlage.

Die DE 40 32 569 A1 betrifft eine netzgekoppelte Photovoltaikanlage mit einer Bedienfront mit mehreren Bedienelementen bzw. einem entsprechenden Tastenfeld, mit dem der Anlagenzustand abgefragt werden kann. Nähere Angaben über die Funktion der Bedienelemente bzw. das Verfahren zur Erkennung einer Betätigung zumindest eines Bedienelements werden nicht gemacht.

Die GB 1 219 074 A betrifft einen Encoder für eine Tastatur bzw. Bedienelemente mit dem ein entsprechend der gedrückten Taste codiertes Signal erzeugt wird, sodass jeder Taste der Tastatur bzw. jedem Bedienelement ein eindeutiger binärer Code zugewiesen werden kann. Zu diesem Zweck werden Schwingkreise durch die Betätigung der Bedienelemente belastet und die Schwingfrequenzen der Resonanzkreise über einen Detektor erfasst. Die Bedienelemente sind nicht galvanisch von der primärseitigen Elektronik getrennt.

Die Aufgabe der vorliegenden Erfindung besteht in der Schaffung eines oben genannten Verfahrens und einer Bedienfront mit welchen der Wirkungsgrad im Wesentlichen nicht beeinflusst wird. Das Verfahren soll möglichst einfach durchführbar sein bzw. die Bedienfront möglichst einfach aufgebaut sein.

Gelöst wird die erfindungsgemäße Aufgabe in verfahrensmäßiger Hinsicht dadurch, dass Bedienelemente mit unterschiedlichen Bauelementen in Serie geschaltet werden, und bei Betätigung zumindest eines Bedienelements an einer Sekundärseite eines Übertragers dieser belastet wird, und die Belastung an einer Primärseite des Übertragers von einer Steuervorrichtung erkannt und ausgewertet wird und dem zumindest einen betätigten Bedienelement zugeordnet wird, wobei an der Primärseite des Übertragers ein Spannungssignal angelegt und die Betätigung zumindest eines Bedienelements an der spannungs- bzw. stromversorgungsfreien Sekundärseite des Übertragers durch die unterschiedliche Veränderung des Spannungssignals an der Primärseite des Übertragers erkannt und ausgewertet wird.

Vorteilhaft ist hierbei, dass das bei Betätigung zumindest eines der Bedienelemente erforderliche Signal durch Belastung eines Übertragers erzeugt wird, wodurch keine Stromversorgung für die galvanisch getrennten Bedienelemente der Bedienfront erforderlich ist. Demnach reduziert sich der Eigenverbrauch des entsprechenden Gerätes, sodass der Wirkungsgrad dadurch nicht beeinträchtigt wird. Die galvanische Trennung sowie die Belastung des Übertragers ist sehr einfach und kostengünstig realisierbar. Da Übertrager als äußerst fehlerunanfällig einzustufen sind, ist die Realisierung auch nicht fehleranfällig. Es ist in einfacher Weise möglich beispielsweise eine Folientastatur als Bedienfront zu verwenden und gleichzeitig die erforderlichen Normen einzuhalten. Die erforderliche galvanische Trennung und die erforderlichen elektrischen Potentiale können durch den erfindungsgemäßen Aufbau eingehalten werden. Zusätzlich wird durch eine derartige Bedienfront der erforderliche Platzbedarf erheblich reduziert bzw. kann die Bedienfront flexibel an den vorhandenen Platzbedarf angepasst werden.

Zur Realisierung ist vorgesehen, dass Bedienelemente mit unterschiedlichen Bauelementen in Serie geschaltet werden, sodass das Spannungssignal bei Betätigung unterschiedlicher Bedienelemente unterschiedlich verändert wird. Ebenso ist es möglich ein Bedienelement ohne Serienschaltung mit einem Bauelement an der Sekundärseite des Übertragers anzuschließen, sodass bei Betätigung dieses Bedienelements die Sekundärseite des Übertragers kurzgeschlossen wird.

Zur Zuordnung des zumindest einen betätigten Bedienelements wird das veränderte Spannungssignal vorzugsweise mit Referenzwerten verglichen, welche beispielsweise in der Steuervorrichtung hinterlegt sind.

Dabei ist es von Vorteil, wenn jedem Bedienelement ein Referenzwert hinterlegt wird und für Kombinationen von zumindest zwei Bedienelementen ebenfalls ein Referenzwert hinterlegt oder ermittelt wird.

Vorteilhafterweise wird das Spannungssignal im Wesentlichen durch ein Rechtecksignal gebildet. Ähnliche von einer Rechteckform abweichende Formen, wie z.B. ein Trapezsignal, sind ebenso möglich.

Um ein Feedback über die Betätigung eines Bedienelements zu bekommen, kann bei Betätigung eines Bedienelements eine Anzeige aktiviert werden. Bevorzugt können dazu Leuchtdioden, welche zusätzlich zu den Bauelementen in Serie oder parallel geschaltet werden, verwendet werden. Das Spannungssignal wird so gewählt, dass die für die Leuchtdioden oder dergleichen erforderliche Spannung bzw. der erforderliche Strom zur Verfügung gestellt wird.

Ebenso wird die Aufgabe der Erfindung durch eine oben genannte Bedienfront gelöst, wobei die Bedienelemente an einer Sekundärseite eines Übertragers angeschlossen und mit unterschiedlichen Bauelementen in Serienschaltung verbunden sind, wobei bei Betätigung des zumindest einen Bedienelements der Übertrager belastet ist, und eine Primärseite des Übertragers zur Auswertung der Belastung und Zuordnung des zumindest einem betätigten Bedienelements mit einer Steuervorrichtung verbunden ist, und mit der Primärseite des Übertragers eine Einrichtung zur Erzeugung eines Spannungssignals zur Erkennung einer Betätigung zumindest eines der an der spannungs- bzw. stromverorgungsfreien Sekundärseite des Übertragers angeordneten Bedienelemente verbunden ist, sodass der Übertrager bei Betätigung unterschiedlicher Bedienelemente unterschiedlich belastet wird.

Weitere Vorteile können aus der folgenden Beschreibung entnommen werden.

Die vorliegende Erfindung wird anhand der beigefügten, schematischen Zeichnungen näher erläutert. Darin zeigen:
Fig. 1 eine schematische Übersichtsdarstellung eines bekannten Wechselrichters einer Photovoltaikanlage; und
Fig. 2 eine erfindungsgemäße Schaltung zur galvanischen Trennung der Bedienfront.

Einführend wird festgehalten, dass gleiche Teile des Ausführungsbeispiels mit gleichen Bezugszeichen versehen werden.

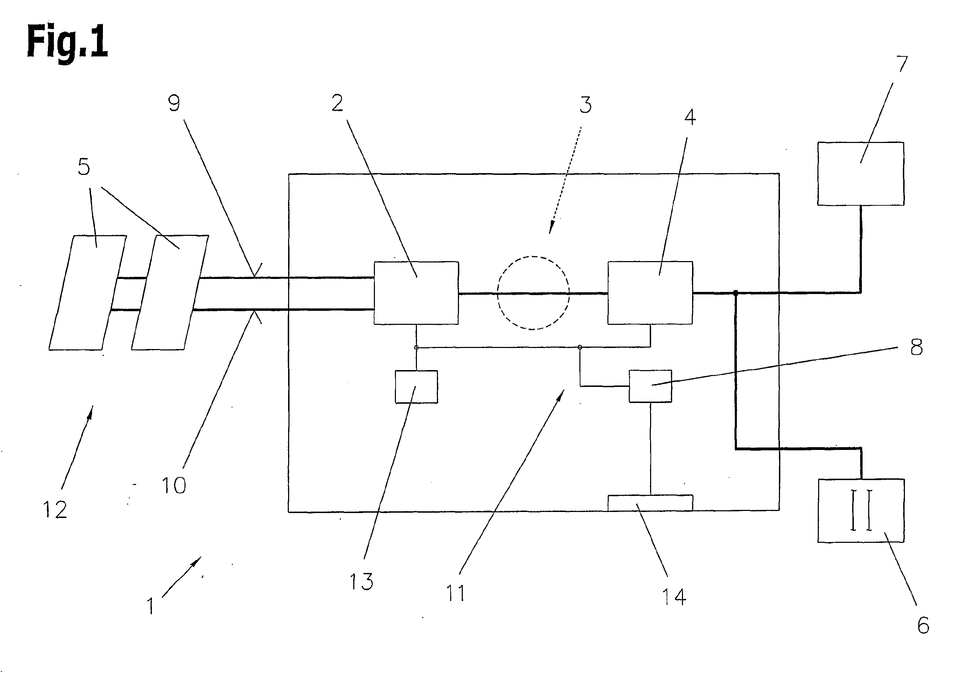

In Fig. 1 ist ein Aufbau eines bekannten Wechselrichters 1, im Detail eines HF-Wechselrichters, dargestellt. Da die einzelnen Komponenten bzw. Baugruppen und Funktionen von Wechselrichtern 1 bereits aus dem Stand der Technik bekannt sind, wird auf diese nachstehend nicht im Detail eingegangen.

Der Wechselrichter 1 weist zumindest einen Eingangs-DC-DC-Wandler 2, einen Zwischenkreis 3 und einen Ausgangs-DC-AC-Wandler 4 auf. Am Eingangs-DC-DC-Wandler 2 ist eine Energiequelle 12 bzw. ein Energieerzeuger angeschlossen, welche bevorzugt aus einem oder mehreren parallel und/oder seriell zueinander geschalteten Solarmodulen 5 gebildet werden. Der Wechselrichter 1 und die Solarmodule 5 werden auch als Photovoltaikanlage bzw. als PV-Anlage bezeichnet. Der Ausgang des Wechselrichters 1 bzw. des Ausgangs-DC-AC-Wandlers 4 kann mit einem Versorgungsnetz 6, wie ein öffentliches oder privates Wechselspannungsnetz oder ein Mehr-Phasennetz, und/oder mit zumindest einem elektrischen Verbraucher 7, welcher eine Last darstellt, verbunden sein. Beispielsweise wird ein Verbraucher 7 durch einen Motor, Kühlschrank, Funkgerät usw. gebildet. Ebenso kann der Verbraucher 7 auch eine Hausversorgung darstellen. Die einzelnen Komponenten des Wechselrichters 1, wie der Eingangs-DC-DC-Wandler 2 usw., können über einen Datenbus 11 mit einer Steuervorrichtung 8 verbunden sein.

Bevorzugt dient ein derartiger Wechselrichter 1 als so genannter netzgekoppelter Wechselrichter 1, dessen Energiemanagement daraufhin optimiert ist, möglichst viel Energie in das Versorgungsnetz 6 einzuspeisen. Wie aus dem Stand der Technik bekannt, werden die Verbraucher 7 über das Versorgungsnetz 6 versorgt. Selbstverständlich können auch mehrere parallel geschaltete Wechselrichter 1 eingesetzt werden. Dadurch kann mehr Energie zum Betrieb der Verbraucher 7 bereitgestellt werden.
Diese Energie wird von der Energiequelle 12 in Form einer Gleichspannung geliefert, welche über zwei Anschlussleitungen 9, 10 mit dem Wechselrichter 1 verbunden ist.

Die Steuervorrichtung 8 bzw. der Regler des Wechselrichters 1 ist beispielsweise durch einen Mikroprozessor, Mikrocontroller oder Rechner gebildet. Über die Steuervorrichtung 8 kann eine entsprechende Steuerung der einzelnen Komponenten des Wechselrichters 1 wie dem Eingangs-DC-DC-Wandler 2 oder dem Ausgangs-DC-AC-Wandler 4, insbesondere der darin angeordneten Schaltelemente, vorgenommen werden. In der Steuervorrichtung 8 sind hierzu die einzelnen Regel- bzw. Steuerabläufe durch entsprechende Software-Programme und/oder Daten bzw. Kennlinien gespeichert.

Des Weiteren ist mit der Steuervorrichtung 8 eine Bedienfront 14 verbunden, durch welche der Benutzer den Wechselrichter 1 konfigurieren bzw. beispielsweise Betriebszustände oder Parameter verändern und anzeigen kann. Damit eine derartige Bedienfront 14 beispielsweise an der Front des Wechselrichters 1 eingesetzt werden kann, muss üblicherweise eine entsprechende Norm erfüllt werden. Diese Norm sieht vor, dass die Bedienfront 14 galvanisch von der restlichen Elektronik, wie dem Eingangs-DC-DC-Wandler 2, Zwischenkreis 3, Ausgangs-DC-AC-Wandler 4 und der Steuervorrichtung 8, getrennt ist. Dadurch wird die erforderliche Sicherheit für den Benutzer gewährleistet.

Erfindungsgemäß erfolgt diese galvanische Trennung durch einen Übertrager 15, dessen Primärseite mit der Steuervorrichtung 8 und dessen Sekundärseite mit der Bedienfront 14 verbunden ist. Erfindungsgemäß ist weiters vorgesehen, dass die Sekundärseite des Übertragers 15 keine eigene Spannungs- bzw. Stromversorgung aufweist.

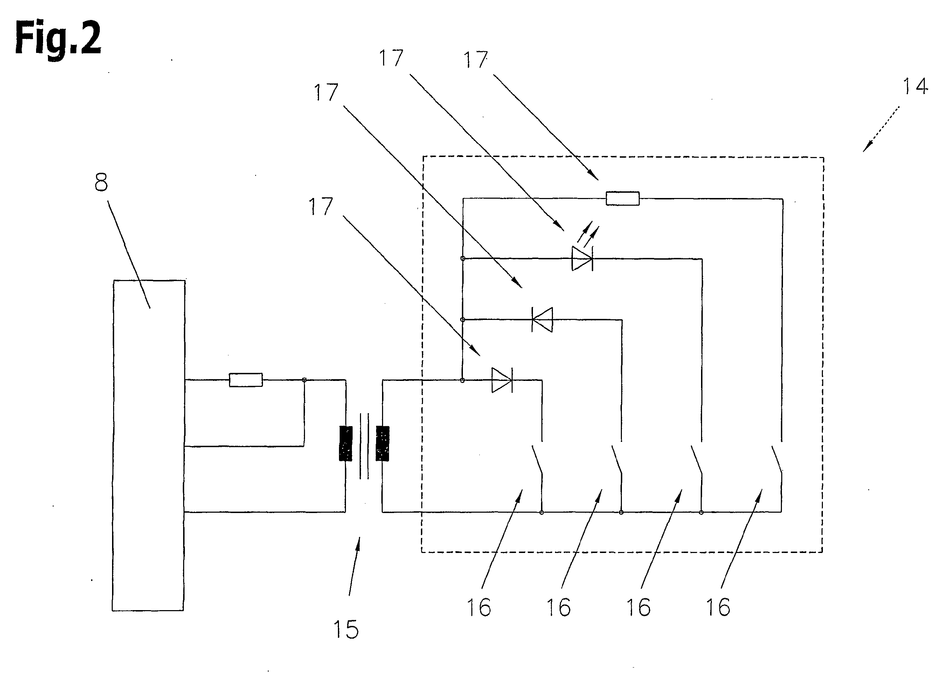

Eine derart erfindungsgemäße galvanische Trennung ist in Fig. 2 dargestellt. Die Bedienfront 14 umfasst beispielsweise vier Bedienelemente 16, wie Taster, welche beispielsweise in einer Folientastatur integriert sind. Dabei ist jedes Bedienelement 16 mit zumindest einem Bauelement 17, wie einem Widerstand, einer Diode oder einem Schwingkreis in Serie geschaltet, sodass der Übertrager 15 bei Betätigung jedes Bedienelements 16 mit einem entsprechenden Bauelement 17 belastet wird. Bei Betätigung eines Bedienelements 16 wird also der Stromkreis auf der Sekundärseite geschlossen und der Übertrager 15 durch das in Serie geschaltete Bauelement 17 belastet. Ist es erforderlich, dass beispielsweise zwei Bedienelemente 16 gleichzeitig betätigt werden müssen, ergibt sich wiederum ein Stromkreis, bei dem der Übertrager 15 durch die Parallelschaltung der den betätigten Bedienelementen 16 in Serie geschalteten Bauelementen 17 belastet wird. Selbstverständlich kann auch einem Bedienelement 16 kein Bauelement 17 in Serie geschaltet sein, sodass die Sekundärwicklung des Übertragers 15 beim Schließen dieses Tasters kurzgeschlossen wird. Durch einen Einsatz von Tastern als Bedienelemente 16 wird in vorteilhafter Weise erreicht, dass der Übertrager 15 nur dann belastet wird, wenn die Bedienelemente 16 betätigt werden. Dass heißt aber auch, dass nur bei Betätigung der Bedienelemente 16 Energie verbraucht wird.

Damit nun von der an der Primärseite des Übertragers 15 angeschlossenen Steuervorrichtung 8 erkannt werden kann, welches Bedienelement 16 der Sekundärseite betätigt wurde, weisen die Bauelemente 17 einen unterschiedlichen Widerstand bzw. Innwiderstand, eine unterschiedliche Diodenflussspannung, usw. auf. Der Übertrager 15 wird also von jedem Bedienelement 16 unterschiedlich belastet, wenn zumindest ein Bedienelement 16 betätigt wird.

Diese Belastung wird bevorzugt von der Steuervorrichtung 8 erkannt, indem diese ein Spannungssignal an die Primärseite des Übertragers 15 anlegt. Bei Betätigung zumindest eines Bedienelements 16 wird das Spannungssignal entsprechend dem Bauelement 17, welches mit dem Taster verbunden ist, an der Sekundärseite verändert. Diese Veränderung überträgt sich entsprechend dem Übersetzungsverhältnis des Übertragers 15 auf die Primärseite, sodass diese von der Steuervorrichtung 8 erkannt wird.

Bevorzugt dient als Spannungssignal im Wesentlichen ein Rechtecksignal, sodass ein relativ kleiner Übertrager 15, wie beispielsweise ein Hochfrequenz-Übertrager 15, eingesetzt werden kann. Hierzu ist für das Spannungssignal wichtig, dass dieses eine möglichst steile Anstiegs- bzw. Abfallflanke aufweist. Das Spannungssignal soll also die Form eines erwähnten Rechtecks oder eines Trapez oder dgl. aufweisen. Die Frequenz des Spannungssignals wird dabei auf die Abfragezeit abgestimmt, sodass eine Belastung, also ein Betätigen eines Bedienelements 16, sicher erkannt wird. Die Bedienelemente 16 werden also nur zu bestimmten Zeiten abgefragt, wodurch zusätzlich Energie eingespart wird. Demnach wird bevorzugt das Spannungssignal von der Steuervorrichtung 8 in Abhängigkeit der Abfragezeit erzeugt und über einen Serienwiderstand an die Primärseite des Übertragers 15 angelegt. Das Abfragen des Spannungssignals zur Erkennung der Betätigung eines Bedienelements 16 erfolgt jedoch bevorzugt direkt an der Primärseite des Übertragers 15, wobei das Abfragen entsprechend der Abfragezeit von der Steuervorrichtung 8 durchgeführt wird. Die Abfragezeit bzw. die Frequenz des Spannungssignals ist dabei in vorteilhafter Weise im Wesentlichen unabhängig vom verwendeten Übertrager 15, da die Veränderung des Spannungssignals lediglich kurz nach dem Auftreten der Belastung erkannt und ausgewertet werden kann. Es kann also auch eine niedrige Frequenz für das Spannungssignal verwendet werden, da eine später auftretende Sättigung des Übertragers 15 keine Auswirkungen auf die Auswertung des Spannungssignals hat. Da jedoch in der Sättigung unnötig Energie verbraucht wird, sollte dieser Zustand trotzdem vermieden werden. Die Frequenz kann auf die Art des Übertragers 15 abgestimmt werden, sodass eine Betätigung eines Bedienelements 16 sicher erkannt wird und gleichzeitig Energie gespart wird.

Damit nun nach der Erkennung einer Veränderung des Spannungssignals an der Primärseite des Übertragers 15 diese einem oder mehreren betätigten Bedienelementen 16 zugeordnet werden kann, sind bevorzugt entsprechende Referenzwerte in der Steuervorrichtung 8 hinterlegt. Diese werden entsprechend mit der aktuellen Veränderung des Spannungssignals verglichen und zumindest einem Bedienelement 16 zugeordnet. Entsprechend können auch zwei oder mehr Bedienelemente 16 gleichzeitig gedrückt werden, wobei für jede Kombination der Betätigung der Bedienelemente 16 ein unterschiedliches Spannungssignal resultiert. Dies ist insbesondere auf die Dimensionierung der Bauelemente 17 zurückzuführen, sodass eine sichere Erkennung aller Kombinationen gewährleistet ist.

Nachdem also die Veränderung des Spannungssignals einem Referenzwert zugeordnet wurde, kann eine entsprechende Aktion, welche jedem Bedienelement 16 bzw. jeder Kombination zugeordnet ist, ausgeführt werden. Eine Aktion kann beispielsweise ein Wechsel der Betriebsart, das Verändern von Parametern, eine Menü-Steuerung oder ähnliches sein.

Ob die Aktion erfolgreich ausgeführt wurde, wird dem Benutzer bevorzugt über ein Display angezeigt. Dieses wird entsprechend von der Steuervorrichtung 8 angesteuert, sodass der Benutzer die veränderten Parameter, den aktuellen Betriebszustand, etc. ablesen kann, wie allgemein aus dem Stand der Technik bekannt ist. So kann beispielsweise das Display auch über den Datenbus 11 mit der Steuervorrichtung 8 verbunden sein. Somit kann die erfindungsgemäße Bedienfront 14 mit einem handelsüblichen Display kombiniert werden.

Zusätzlich kann dem Benutzer über die erfindungsgemäße Bedienfront 14 angezeigt werden, welches Bedienelement 16 betätigt wird bzw. ob dieses korrekt betätigt wurde. Bevorzugt erfolgt dies derart, dass als Bauelemente 17 Leuchtdioden verwendet werden bzw. zusätzlich zu den Bauelementen 17 Leuchtdioden in Serie oder parallel geschaltet werden. Diese Leuchtdioden leuchten, wenn das entsprechende Bedienelement 16 betätigt wird bzw. eine Kombination von Bedienelementen 16 betätigt wird. Voraussetzung hierfür ist eine ausreichende Energieübertragung, also dass die Amplitude des Rechtecksignals an die für die Leuchtdioden erforderliche Spannung angepasst ist. Somit ist mit dem erfindungsgemäßen Verfahren bzw. der erfindungsgemäßen Bedienfront 14 in vorteilhafter Weise eine Rückmeldung über das bzw. die betätigten Bedienelement(e) 16 für den Benutzer realisiert.

Im Allgemeinen sei noch erwähnt, dass, wie beschrieben, zwar bevorzugt die Zuordnung des Spannungssignals zu einem oder mehreren Bedienelementen 16 und die Ausführung der zugeordneten Aktion von der Steuervorrichtung 8 durchgeführt wird, aber selbstverständlich kann dafür auch eine eigene Steuervorrichtung eingesetzt werden. Die Erfindung ist aber auch unabhängig von der Entfernung zwischen der Bedienfront 14 und dem Übertrager 15, von der Entfernung zwischen den Bedienelementen 16 und den Bauelementen 17 und/oder von Ähnlichen. Beispielsweise können die Bedienelemente 16 in einer Folientastatur integriert sein, welche über Leitungen mit den Bauelementen 17 verbunden sind, welche auf einer Platine zusammen mit dem Übertrager 15 angeordnet sind, wobei die Primärseite des Übertragers 15 wiederum über Leitungen mit der Steuervorrichtung 8 verbunden ist. Bei einer weiteren Ausführung können die Bauelemente 17, die Leuchtdioden und die Bedienelemente 16 in der Folientastatur - welche in diesem Fall der Bedienfront 14 entspricht - integriert sein und über Leitungen mit dem Übertrager 15 verbunden sein, welcher auf der Platine des Gerätes angeordnet und mit der Steuervorrichtung 8 verbunden ist. Diese Beispiele zeigen demnach, dass mit der erfindungsgemäßen Lösung die galvanische Trennung der Bedienfront 14 sehr flexibel und einfach ausgeführt werden kann. Entsprechend kann auch der Übertrager 15 an einer beliebigen Stelle platziert werden.

## Patentansprüche

1. Verfahren zur Erkennung einer Betätigung zumindest eines von mehreren galvanisch getrennten Bedienelementen (16) einer Bedienfront (14) eines Wechselrichters (1), **dadurch gekennzeichnet, dass** Bedienelemente (16) mit unterschiedlichen Bauelementen (17) in Serie geschaltet werden, und bei Betätigung zumindest eines Bedienelements (16) an einer Sekundärseite eines Übertragers (15) dieser belastet wird, und die Belastung an einer Primärseite des Übertragers (15) von einer Steuervorrichtung (8) erkannt und ausgewertet wird und dem zumindest einen betätigten Bedienelement (16) zugeordnet wird, wobei an der Primärseite des Übertragers (15) ein Spannungssignal angelegt und die Betätigung zumindest eines Bedienelements (16) an der spannungs- bzw. stromversorgungsfreien Sekundärseite des Übertragers (15) durch die unterschiedliche Veränderung des Spannungssignals an der Primärseite des Übertragers (15) erkannt und ausgewertet wird.

2. Verfahren nach Anspruch 1, **dadurch gekennzeichnet, dass** zur Zuordnung des zumindest einen betätigten Bedienelements (16) das veränderte Spannungssignal mit in der Steuervorrichtung (8) hinterlegten Referenzwerten verglichen wird.

3. Verfahren nach Anspruch 2, **dadurch gekennzeichnet, dass** zu jedem Bedienelement (16) ein Referenzwert hinterlegt wird und für Kombinationen von zumindest zwei Bedienelementen (16) ein Referenzwert hinterlegt oder ermittelt wird.

4. Verfahren nach einem der Ansprüche 1 bis 3, **dadurch gekennzeichnet, dass** das Spannungssignal im Wesentlichen durch ein Rechtecksignal gebildet wird.

5. Verfahren nach einem der Ansprüche 1 bis 4, **dadurch gekennzeichnet, dass** bei Betätigung eines Bedienelements (16) eine Anzeige aktiviert wird.

6. Bedienfront (14) für einen Wechselrichter (1) mit mehreren galvanisch getrennten Bedienelementen (16), **dadurch gekennzeichnet, dass** die Bedienelemente (16) an einer Sekundärseite eines Übertragers (15) angeschlossen und mit unterschiedlichen Bauelementen (17) in Serienschaltung verbunden sind, wobei bei Betätigung zumindest eines Bedienelements (16) der Übertrager (15) belastet ist, und dass eine Primärseite des Übertragers (15) zur Auswertung der Belastung und Zuordnung des zumindest einen betätigten Bedienelements (16) mit einer Steuervorrichtung (8) verbunden ist, und dass mit der Primärseite des Übertragers (15) eine Einrichtung zur Erzeugung eines Spannungssignals zur Erkennung einer Betätigung zumindest eines der an der spannungs- bzw. stromversorgungsfreien Sekundärseite des Übertragers (15) angeordneten Bedienelemente (16) verbunden ist, sodass der Übertrager (15) bei Betätigung unterschiedlicher Bedienelemente (16) unterschiedlich belastet wird.

## Claims

1. Method for the identification of an actuation of at least one of a plurality of galvanically isolated operating elements (16) of a front panel (14) of an inverter (1), **characterised in that** operating elements (16) are connected in series to different components (17), and when actuating at least one operating element (16) on a secondary side of a transformer (15), this is loaded and the loading is identified and evaluated on a primary side of the transformer (15) by a control device (8) and is assigned to the at least one actuated operating element (16), wherein a voltage signal is applied on the primary side of the transformer (15) and the actuation at least of one operating element (16) is identified and evaluated on the voltage- or current-supply-free secondary side of the transformer (15) by means of the different changing of the voltage signal on the primary side of the transformer (15).

2. Method according to Claim 1, **characterised in that** for assigning the at least one actuated operating element (16), the changed voltage signal is compared with reference values stored in the control device (8).

3. Method according to Claim 2, **characterised in that** a reference value is stored for each operating element (16) and a reference value is stored or established for combinations of at least two operating elements (16).

4. Method according to any one of Claims 1 to 3, **characterised in that** the voltage signal is essentially formed by a rectangular signal.

5. Method according to any one of Claims 1 to 4, **characterised in that** a display is activated in the case of the actuation of an operating element (16).

6. Front panel (14) for an inverter (1) with a plurality of galvanically isolated operating elements (16), **characterised in that** the operating elements (16) are connected on a secondary side of a transformer (15) and are connected to different components (17) in series connection, wherein the transformer (15) is loaded in the case of the actuation of at least one operating element (16), and **in that** a primary side of the transformer (15) is connected to a control device (8) for evaluating the loading and assignment of the at least one actuated operating element (16), and **in that** a device for generating a voltage signal for identifying an actuation at least of one of the operating elements (16) arranged on the voltage- or current-supply-free secondary side of the transformer (15) is connected to the primary side of the transformer (15), so that the transformer (15) is loaded differently in the case of the actuation of different operating elements (16).

## Revendications

1. Procédé d'identification d'un actionnement d'au moins un parmi plusieurs éléments de commande (16) à séparation galvanique, d'un panneau de commande (14) d'un onduleur (1), **caractérisé en ce que** des éléments de commande (16) sont montés en série avec différents composants (17) et **en ce que**, en cas d'actionnement d'au moins un élément de commande (16) sur un côté secondaire d'un transformateur (15), celui-ci est chargé, et la charge sur un côté primaire du transformateur (15) est identifiée et analysée par un dispositif de commande (8) et est affectée à au moins un élément de commande (16) actionné, un signal de tension étant appliqué sur le côté primaire du transformateur (15), et l'actionnement d'au moins un élément de commande (16) sur le côté secondaire du transformateur (15) sans tension ou sans alimentation en courant étant identifié et analysé par la modification variable du signal de tension sur le côté primaire du transformateur (15).

2. Procédé selon la revendication 1, **caractérisé en ce que**, pour l'affectation de l'au moins un élément de commande (16) actionné, le signal de tension modifié est comparé à des valeurs de référence enregistrées dans le dispositif de commande (8).

3. Procédé selon la revendication 2, **caractérisé en ce qu'**une valeur de référence est enregistrée pour chaque élément de commande (16), et **en ce qu'**une valeur de référence est enregistrée ou déterminée pour des combinaisons d'au moins deux éléments de commande (16).

4. Procédé selon l'une quelconque des revendications 1 à 3, **caractérisé en ce que** le signal de tension est essentiellement formé par un signal carté.

5. Procédé selon l'une quelconque des revendications 1 à 4, **caractérisé en ce qu'**un affichage est activé lors de l'actionnement d'un élément de commande (16).

6. Panneau de commande (14) destiné à un onduleur (1) muni de plusieurs éléments de commande (16) à séparation galvanique, **caractérisé en ce que** les éléments de commande (16) sont raccordés sur un côté secondaire d'un transformateur (15) et sont montés en série avec différents composants (17), le transformateur (15) étant chargé lors de l'actionnement d'au moins un élément de commande (16), et **en ce qu'**un côté primaire du transformateur (15) est relié à un dispositif de commande (8) pour l'analyse de la charge et pour l'affection de l'au moins un élément de commande (16) actionné, et **en ce qu'**un dispositif destiné à générer un signal de tension pour l'identification de l'actionnement d'au moins un des éléments de commande (16) disposés sur le côté secondaire du transformateur (15) sans tension ou sans alimentation en courant est relié au côté primaire du transformateur (15) de sorte que le transformateur (15) est chargé de manière variable lors de l'actionnement de différents éléments de commande (16).
